# EUROPÄISCHE PATENTANMELDUNG

(11) **EP 2 336 529 A2**
(43) Veröffentlichungstag der Anmeldung: **22.06.2011**
(21) Anmeldenummer: 10015406.1
(22) Anmeldetag: 08.12.2010
(51) Int. Cl.: F02D 19/08

(54) **Verfahren zum Betrieb einer Brennkraftmaschine**

(30) Priorität: 15.12.2009 DE 102009058220
(71) Anmelder: Jowa Technology AB, 42834 Kallered/Göteborg (SE)
(72) Erfinder: Seehuusen, Jan, 41254 Göteborg (SE); Mamerow, Bernd, 22339 Hamburg (DE); Moeck, Dr. Ralf, 1869 Lambrechtshagen (DE)
(74) Vertreter: Kossak, Sabine

(57) **Zusammenfassung**

Es wird ein Verfahren zum Betrieb einer Brennkraftmaschine, insbesondere eines Schiffsmotors, mit einer Mischung aus zumindest zwei unterschiedlichen Kraftstoffen offenbart, die jeweils durch einen Satz Parameter definiert werden. Um den Schiffsmotor auch längere Strecken in einem ausgewiesenen Seegebiet mit einem technisch und wirtschaftlich optimalen Kraftstoffgemisch zu betreiben, das vorgegebenen Randbedingungen genügt, ist erfindungsgemäß vorgesehen, dass für die Kraftstoffe für mindestens einen der Parameter jeweils ein Kraftstoff-Istwert bestimmt wird, für die Kraftstoffe jeweils ein Mischanteil in Abhängigkeit von vorgebbaren Zielwerten des zumindest einen Parameters für das Gemisch bestimmt wird und das Gemisch der Kraftstoffe auf Grundlage der Mischanteile für die Verbrennung bereitgestellt wird. Es wird ferner eine Anlage zum Mischen von Kraftstoffen für ein derartiges Verfahrens offenbart.

## Beschreibung

Die Erfindung betrifft ein Verfahren zum Betrieb einer Brennkraftmaschine, insbesondere eines Schiffsmotors, mit einem Gemisch aus zumindest zwei unterschiedlichen Kraftstoffen, die jeweils durch einen Satz Parameter definiert werden. Die Erfindung betrifft weiterhin eine Anlage zum Mischen von Kraftstoffen für ein derartiges Verfahrens.

Die meisten Welthandelsschiffe verwenden als Kraftstoff zum Betreiben ihrer Schiffsmotoren derzeit Schweröl (heavy fuel oil; HFO). Aus umweltpolitischen Gründen ist dies aber mit Nachteilen verbunden, da aufgrund des hohen Schwefelgehalts des Schweröls bei der Verbrennung im Schiffsmotor hohe SOₓ-Emissionen entstehen. Daher fordern bereits nationale und internationale Regularien in ausgewiesenen Fahrtgebieten, beispielsweise bestimmte Seegebiete und/oder Hafenanlagen, den Einsatz schwefelreduzierter Kraftstoffe für den Betrieb von Schiffsmotoren, um die SOₓ-Emissionen zu reduzieren. Je nach Fahrtgebiet variieren die Grenzwerte für den Schwefelgehalt im Kraftstoff. MARPOL schreibt beispielsweise für ausgewiesene Gebiete (Ostsee, Nordsee) einen maximalen Schwefelgehalt im Kraftstoff von 1,5 % vor.

Deshalb werden zunehmend Diesel-Kraftstoff (marine diesel oil; MDO) oder eine Schweröl-Diesel-Mischung in Schiffsmotoren eingesetzt. Der Schwefelgehalt von Diesel-Kraftstoff beträgt etwa 0,1 Gew.-% oder weniger. In der Zukunft ist davon auszugehen, dass nationale oder territoriale Regularien unterschiedliche Grenzwertvorgaben für den Schwefelgehalt im Kraftstoff festlegen werden.

Aus der DE 10 2007 056 819 A1 ist ein Verfahren zum Umschalten eines Schiffsmotors von einem Betrieb mit Dieselkraftstoff auf einen Betrieb mit Schweröl als Brennstoff und umgekehrt bekannt, welches eine Schädigung des Schiffsmotors beim Umstellvorgang vermeidet. Hierzu ist vorgesehen, dass bei dem Wechsel von der ersten auf die zweite Kraftstoffart von dem zweiten Kraftstoff ein stetig größer werdender Anteil der Mischung zugegeben wird, wodurch sich der Anteil des ersten Kraftstoffes in der Mischung stetig reduziert.

Vor diesem Hintergrund liegt der Erfindung die Aufgabe zugrunde, eine Möglichkeit zu schaffen, einen Schiffsmotor auch längere Strecken in einem ausgewiesenen Seegebiet mit einem technisch und wirtschaftlich optimalen Kraftstoffgemisch zu betreiben, welches vorgegebenen Randbedingungen und Grenzwertvorgaben bestimmter Parameter genügt.

Diese Aufgabe wird erfindungsgemäß mit einem Verfahren gemäß den Merkmalen des Anspruchs 1 und mit einer Anlage mit den Merkmalen des Anspruchs 8 gelöst. Die weitere Ausgestaltung der Erfindung ist den Unteransprüchen zu entnehmen.

Bei einem Verfahren der eingangs beschriebenen Art ist erfindungsgemäß vorgesehen, dass für die Kraftstoffe für mindestens einen der Parameter jeweils ein Kraftstoff-Istwert bestimmt wird, für die Kraftstoffe jeweils ein Mischanteil in Abhängigkeit von vorgebbaren Zielwerten des zumindest einen Parameters für das Gemisch bestimmt wird und das Gemisch der Kraftstoffe auf Grundlage der Mischanteile für die Verbrennung bereitgestellt wird. Parameter zur Definition der Kraftstoffe können beispielsweise Angaben für Inhaltsstoffe, beispielsweise zum Schwefelgehalt, und/oder Angaben zu Kraftstoffeigenschaften sein, beispielsweise zur Viskosität, Temperatur und/oder Druck. Diese können für jeden Kraftstoff und das Kraftstoffgemisch sowohl vorgebbare Parameter als auch Messwerte sein.

Der Kern der Erfindung besteht darin, dass ein oder mehrere dieser Parameter ausgewählt werden. Für die ausgewählten Parameter wird der Kraftstoff-Istwert bestimmt. Das kann beispielsweise durch eine Messung mittels geeigneter Sensoren erfolgen, beispielsweise bei Temperatur, Druck und/oder Viskosität, oder aber auch durch eine entsprechende Eingabe in einen Datenspeicher, beispielsweise bei Inhaltsangaben wie dem Schwefelgehalt. Anhand der Kraftstoff-Istwerte der einzelnen Kraftstoffe und einem Zielwert dieses Parameters für das bereitzustellende Kraftstoffgemisch erfolgt der Mischvorgang.

Zur Überprüfung der Funktionalität des Mischvorganges ist erfindungsgemäß vorgesehen, dass Gemisch-Istwerte für die den Zielwerten entsprechende Parameter bestimmt werden.

Um vorgegebene Grenzwertbedingungen einzuhalten, ist erfindungsgemäß vorgesehen, dass die Mischanteile aufgrund der Gemisch-Istwerte adaptiert werden. Durch die Adaption bzw. Anpassung der Mischanteile ist eine automatisierte Regelung der Parameter des Kraftstoffgemisches möglich.

In vorteilhafter Weise können die Zielwerte fest vorgegeben werden. Dies kann beispielsweise bei einer längeren Fahrt in einem Seegebiet mit vorgegebenen Grenzwerten erfolgen. Alternativ können die Zielwerte variabel vorgegeben werden. Dies kann beispielsweise bei einem Wechsel bzw. Übergang von unterschiedlichen Grenzwerten erfolgen, so dass eine Anpassung kontinuierlich erfolgen kann und ein abrupter Wechsel der Kraftstoffart vermeidbar ist, die der Verbrennung zugeführt wird.

Zur Dokumentation und zum Nachweis des Einhaltens normativer Vorgaben ist erfindungsgemäß vorgesehen, dass zumindest ein Teil der Kraftstoff-Istwerte, der Gemisch-Istwerte und/oder der Zielwerte gespeichert werden.

Um eine ordnungsgemäße Verbrennung in dem Schiffsmotor zu ermöglichen, ist erfindungsgemäß vorgesehen, dass die Kraftstoffe und/oder das Kraftstoffgemisch vor der Verbrennung konditioniert werden, beispielsweise kann das Kraftstoffgemisch homogenisiert werden oder es kann eine Temperatureinstellung erfolgen.

Die erfindungsgemäße Anlage zum Mischen von Kraftstoffen für den Betrieb einer Brennkraftmaschine, insbesondere eines Schiffsmotors, mit einem Kraftstoffgemisch aus zumindest zwei unterschiedlichen Kraftstoffen weist jeweils eine Eingangsleitung für jeden der Kraftstoffe und eine Ausgangsleitung für das Kraftstoffgemisch, die über zumindest ein Regelelement miteinander verbunden sind, ein Mischelement, das stromab einer Zumischung des einen zum anderen Kraftstoff angeordnet ist, und eine Steuerung auf, die eingerichtet ist, das zumindest eine Regelelement anzusteuern.

Um eine Beschädigung des Schiffsmotors durch ungeeigneten Kraftstoff zu vermeiden, weist die erfindungsgemäße Anlage bevorzugt eine Überwachungseinrichtung auf, die eingerichtet ist, vor einer Inbetriebnahme der Anlage eine Verträglichkeit der beiden zu mischenden Kraftstoffe zu überwachen und im Falle einer Unverträglichkeit die Anlage zu verblocken.

Die Eingangsleitungen und die Ausgangsleitung sind in vorteilhafter Weise gegeneinander thermisch und/oder drucktechnisch entkoppelt, um gegenseitige Beeinflussung und Störung möglicher Sensor- bzw. Messsignale weitestgehend zu vermeiden.

Damit zu jedem Zeitpunkt, auch in einem Störungsfall, die Versorgung des Schiffsmotors mit Brenn- bzw. Kraftstoff gewährleistet ist, ist die erfindungsgemäße Anlage bevorzugt in einem Bypass zu einem manuellen Umschaltsystem angeordnet ist, welches ein automatisches Absperrventil aufweist.

Die Erfindung lässt verschiedene Ausführungsformen zu. Zur weiteren Verdeutlichung ihres Grundprinzips wird sie nachfolgend beispielhaft näher beschrieben.

Die erfindungsgemäße Anlage zum Mischen zweier Kraftstoffe zum Betreiben einer Brennkraftmaschine, insbesondere eines Schiffsmotors, weist zwei Eingangsleitungen und eine Ausgangsleitung auf. Die erste Eingangsleitung ist über eine zum Schiff gehörende Kraftstoffhauptleitung mit einem Dieselvorrat verbunden, während die zweite Eingangsleitung mit einer weiteren, ebenfalls zum Schiff gehörenden Kraftstoffhauptleitung mit einem Schwerölvorrat verbunden ist. Zwischen der Eingangsleitung für den Dieselkraftstoff und dem Dieselvorrat und der Eingangsleitung für das Schweröl und dem Schwerölvorrat kann in der entsprechenden Kraftstoffhauptleitung ein Rückschlagventil vorgesehen, um ein unbeabsichtigtes Rückfließen von Kraftstoff zu verhindern.

Die beiden Eingangsleitungen führen zu einem geeigneten Regelelement. Dies kann vorteilhaft ein Mischventil, beispielsweise ein 3-Wege-Ventil sein. Alternativ sind statt des Mischventils zwei, beispielsweise frequenzgeregelte Pumpen einsetzbar. Die Eingangsleitungen sind aus zulassungsbedingten Gründen mit erforderlichen Armaturen gemäß einschlägiger Klassifikation ausgerüstet. Dies können beispielsweise Sensoren für die Kraftstofftemperatur, den Kraftstoffdruck und/oder die Viskosität sein. Das Regelelement ist beispielsweise mit einem elektrischen Stellantrieb versehen und wird von einer geeigneten Steuerung mittels einer entsprechenden Steuer- und Regelfunktion angesteuert. Hierbei bestimmt die Steuerung die Mischanteile in Abhängigkeit von vorgebbaren und/oder definierten Zielwerten. Die Zielwerte können z.B. über eine vorhandene Eingabeeinrichtung eingegeben werden.

In der Ausgangsleitung für das Kraftstoffgemisch ist eine Mischeinrichtung, beispielsweise ein statischer Mischer, vorgesehen. Die Ausgangleitung ist mit einer zum Schiff gehörenden Hauptversorgungsleitung des Schiffsmotors mit Brennstoff verbunden. Bei der erfindungsgemäßen Mischanlage sind sowohl die beiden Eingangsleitungen und die Ausgangsleitung sowie die entsprechenden Regelelemente und Armaturen sind jeweils zueinander thermisch und drucktechnisch entkoppelt, um eine gegenseitige Beeinflussung der Sensoren und deren Messsignale zu vermeiden.

Die bordeigenen Kraftstoffhauptleitungen und die Hauptversorgungsleitung sind über ein manuelles Umschaltventil miteinander verbunden. Die Mischanlage ist hierzu in einem Bypass angeordnet. In die bordeigene Brennstoffzuleitung ist ein automatisch betätigbares Absperrventil eingesetzt, welches im Betrieb der Mischanlage diesen Kraftstoffstrompfad verschließt. Dies gewährleistet, dass die Versorgung des Schiffsmotors mit Brennstoff ausschließlich über die erfindungsgemäße Mischanlage erfolgt.

Im Falle einer Störung, beispielsweise bei einem Ausfall der Bordstromversorgung wird dieses Absperrventil automatisch geöffnet, damit die Versorgung des Schiffsmotors mit Brennstoff gewährleistet ist. In einem derartigen Störungsfall verbleibt das Regelelement in seiner letzten Position bzw. Einstellung und nimmt nach einem Ende der Störung den Betrieb aus dieser Position bzw. mit dieser Einstellung wieder auf.

Schließlich sind an der ersten Eingangsleitung, an der zweiten Eingangsleitung sowie an der Ausgangsleitung jeweils Temperatursensoren und Drucksensoren vorgesehen, die über jeweilige Datenverbindungen ihre Messsignale an die Steuerung zur Weiterverarbeitung weitergeben. An der Steuerung ist bevorzugt eine geeignete, beispielsweise elektronische Speichereinrichtung für Steuerungs- und Schaltvorgänge sowie die Messsignale der Sensoren angeordnet. So kann die Funktionsfähigkeit der Anlage, aktuelle Betriebszustände, eingestellte Regel- und Grenzwertparameter sowie Störungs- und Alarminformationen gegebenenfalls manipulationsfrei dokumentiert werden.

Die Temperaturwerte können bei der Regelung des Mischungsverhältnisses berücksichtigt werden. Dabei wird entsprechend dem angestrebten Mischungsverhältnis aus den mit den Temperatursensoren erfassten Temperaturen der zu mischenden Kraftstoffe unmittelbar vor dem jeweiligen Regelelement eine Temperatur für das Kraftstoffgemisch unmittelbar nach der Zumischung des einen zum anderen Kraftstoff bestimmt. Die Stellung des jeweiligen Regelelementes wird solange verändert, bis die bestimmte Mischtemperatur erreicht ist. Bei Vorgabe einer zulässigen Abweichung der erreichten Mischtemperatur hält das jeweilige Regelelement das Mischungsverhältnis permanent und automatisch. Sich ändernde Eintrittstemperaturen der zu mischenden Kraftstoffe führen automatisch zu einer Neubestimmung der dem eingestellten Mischungsverhältnis zu Grunde gelegten Mischtemperatur. Zur Minimierung äußerer thermischer Einflüsse kann die Anlage an den Systemschnittstellen thermisch entkoppelt und zur Minimierung äußerer Druckeinflüsse kann die Anlage an den Systemschnittstellen drucktechnisch entkoppelt sein.

Zur Gewährleistung eines sicheren Betriebes des Schiffsmotors kann die Kraftstofftemperatur direkt vor Einspritzpumpen des Motors überwacht werden. Analog zur Bestimmung der Temperatur des Kraftstoffgemisches unmittelbar nach der Zumischung des einen zum anderen Kraftstoff wird für das aktuell eingestellte Mischungsverhältnis eine zu erwartende Temperatur des Kraftstoffgemisches vor den Einspritzpumpen bestimmt. Zur Bestimmung der Mischtemperatur vor den Einspritzpumpen werden dann konfigurierbare Vorgabeparameter für den jeweiligen Betrieb mit den zu mischenden Kraftstoffen verwendet. Entsprechend dem Mischungsverhältnis ergibt sich somit eine Mischtemperatur, die bezüglich eines einstellbaren Grenzwertes der absoluten Temperatur sowie des zeitlichen Temperaturanstieges überwacht wird. Im Falle einer Grenzwertüberschreitung stoppt die Anlage automatisch und hält das eingestellte Mischungsverhältnis konstant aufrecht. Sofern die Temperatur und Temperaturanstieg wieder innerhalb der vorgegebenen Grenzwerte liegen, kann die Anlage den Mischprozess wieder starten.

Bei Erreichen parametrierbarer Temperaturgrenzen besteht die Möglichkeit aktiv Einrichtungen zur geregelten Vorwärmung, für den Betrieb mit hochviskosen Kraftstoff, bzw. Abkühlung, für den Betrieb mit niedrigviskosen Kraftstoff, des Mischkraftstoffes anzusteuern bzw. passiv den Betreiber über die Notwendigkeit der Vorwärmung bzw. Abkühlung zu informieren. Zudem kann bei dem aktiven Mischprozess eine Ansteuerung eines Homogenisators erfolgen, der im Kraftstoffsystem des Schiffsmotors eingebunden werden kann. Dieser gewährleistet die kontinuierliche Homogenität und korrekte Viskositätseinstellung des Kraftstoffgemisches.

Mit dem erfindungsgemäßen Verfahren zum Betrieb eines Schiffsmotors mit unterschiedlichen Kraftstoffqualitäten ist es dem Betreiber möglich, durch entsprechende Kraftstoffmischung zumindest zweier Kraftstoffe mit beispielsweise unterschiedlichen Schwefelgehalten einen den geltenden Vorschriften nach gerechten Betrieb sicherzustellen. Der Prozess der Umstellung auf einen neuen Grenzwert erfolgt nach Vorgabe des angestrebten Grenzwertes automatisch unter Beachtung einer für einen sicheren Motorbetrieb erforderlichen, in der Anlage konfigurierbaren Zeitdauer. Sofern der eingestellte Grenzwert in der Kraftstoffmischung erreicht ist, hält, überwacht und dokumentiert die Anlage das Mischungsverhältnis und damit den gewählten Grenzwert für den Schwefelgehalt automatisch. Mit der Anlage ist die Einstellung des Mischungsverhältnisses von 0% eines Kraftstoffs bis zu 100% desselben Kraftstoffs in allen Prozentschritten möglich. Entsprechend des Schwefelgehaltes beider Kraftstoffe kann für jeden Schwefelgehalt des Kraftstoffgemischs innerhalb der durch den Schwefelgehalt der zu mischenden Kraftstoffe vorgegebenen Grenzen eine homogene Kraftstoffmischung erzeugt werden. Die Anlage zur Kraftstoffmischung kann sowohl zum Füllen von Vorrats- oder Verbrauchstank oder auch im direkten Zulauf zum Motor eingesetzt werden. Die zu mischenden Kraftstoffe können statisch oder über Pumpen der Mischanlage zugeführt werden.

## Patentansprüche

1. Verfahren zum Betrieb einer Brennkraftmaschine, insbesondere eines Schiffsmotors, mit einem Gemisch aus zumindest zwei unterschiedlichen Kraftstoffen, die jeweils durch einen Satz Parameter definiert werden, **dadurch gekennzeichnet, dass** für die Kraftstoffe für mindestens einen der Parameter jeweils ein Kraftstoff-Istwert bestimmt wird, für die Kraftstoffe jeweils ein Mischanteil in Abhängigkeit von vorgebbaren Zielwerten des zumindest einen Parameters für das Gemisch bestimmt wird und das Gemisch der Kraftstoffe auf Grundlage der Mischanteile für die Verbrennung bereitgestellt wird.

2. Verfahren nach Anspruch 1, **dadurch gekennzeichnet, dass** Gemisch-Istwerte für die den Zielwerten entsprechende Parameter bestimmt werden.

3. Verfahren nach Anspruch 2, **dadurch gekennzeichnet, dass** die Mischanteile aufgrund der Gemisch-Istwerte adaptiert werden.

4. Verfahren nach zumindest einem der vorhergehenden Ansprüche, **dadurch gekennzeichnet, dass** die Zielwerte fest vorgegeben werden.

5. Verfahren nach zumindest einem der Ansprüche 1 bis 3, **dadurch gekennzeichnet, dass** die Zielwerte variabel vorgegeben werden.

6. Verfahren nach zumindest einem der vorhergehenden Ansprüche, **dadurch gekennzeichnet, dass** zumindest ein Teil der Kraftstoff-Istwerte, der Gemisch-Istwerte und/oder der Zielwerte gespeichert werden.

7. Verfahren nach zumindest einem der vorhergehenden Ansprüche, **dadurch gekennzeichnet, dass** die Kraftstoffe und/oder das Kraftstoffgemisch vor der Verbrennung konditioniert werden.

8. Anlage zum Mischen von Kraftstoffen für den Betrieb einer Brennkraftmaschine, insbesondere eines Schiffsmotors, mit einem Kraftstoffgemisch aus zumindest zwei unterschiedlichen Kraftstoffen mit jeweils einer Eingangsleitung für jeden der Kraftstoffe und einer Ausgangsleitung für das Kraftstoffgemisch, die über zumindest ein Regelelement miteinander verbunden sind, mit einem Mischelement, das stromab einer Zumischung des einen zum anderen Kraftstoff angeordnet ist, und mit einer Steuerung, die eingerichtet ist, das zumindest eine Regelelement anzusteuern.

9. Anlage nach Anspruch 8, **gekennzeichnet durch** eine Überwachungseinrichtung, die eingerichtet ist, vor einer Inbetriebnahme der Anlage eine Verträglichkeit der beiden zu mischenden Kraftstoffe überwachen und im Falle einer Unverträglichkeit die Anlage zu verblocken.

10. Anlage nach einem der Ansprüche 8 oder 9, **dadurch gekennzeichnet, dass** die Eingangsleitungen und die Ausgangsleitung gegeneinander thermisch und/oder drucktechnisch entkoppelt sind.

11. Anlage nach zumindest einem der Ansprüche 8 bis 9, **dadurch gekennzeichnet, dass** sie in einem Bypass zu einem manuellen Umschaltsystem angeordnet ist, welches ein automatisches Absperrventil aufweist.
